# EUROPEAN PATENT APPLICATION

(11) **EP 4 614 928 A1**
(43) Date of publication of application: **10.09.2025**
(21) Application number: 22965484.3
(22) Date of filing: 16.11.2022
(51) Int. Cl.: H04L 43/087, H04L 43/0852

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN); GUO, Yali, Dongguan, Guangdong 523860 (CN)
(74) Representative: RGTH
(86) International application number: PCT/CN2022/132320
(87) International publication number: WO 2024/103300

(57) **Abstract**

Communication methods and communication apparatuses are provided, the method include: obtaining, by a first network entity, first jitter information and/or first delay information; and determining, by the first network entity according to the first jitter information and/or the first delay information, target jitter information of a target service flow between a second network entity and a third network entity. The method in the embodiments of the present application helps the second network entity to perform CDRX configuration based on the target jitter information.

## Description

### TECHNICAL FIELD

The present application relates to the field of communication technology, and in particular, to communication methods and communication apparatuses.

### BACKGROUND

In some communication systems, in order to save energy consumption while supporting extended reality and multimedia services, service traffic characteristics, such as periodicity and jitter, may be provided by an application server (AS) to a radio access network (RAN) for enhancing node management and optimizing connected mode discontinuous reception (CDRX) configuration. However, effect of existing CDRX configuration is not ideal.

### SUMMARY

Embodiments of the present application provide communication methods and communication apparatuses. Each aspect involved in the embodiments of the present application will be described below.

In a first aspect, a communication method is provided, which includes: obtaining, by a first network entity, first jitter information and/or first delay information; and determining, by the first network entity according to the first jitter information and/or the first delay information, target jitter information of a target service flow between a second network entity and a third network entity.

In a second aspect, a communication method is provided, which includes: transmitting, by a sixth network entity, first information to a fourth network entity, where the first information is used to trigger the fourth network entity to determine target jitter information of a target service flow between a second network entity and a third network entity.

In a third aspect, a communication method is provided, which includes: receiving, by a second network entity, target jitter information of a target service flow between the second network entity and a third network entity transmitted by a fourth network entity; and performing, by the second network entity based on the target jitter information, connected mode discontinuous reception (CDRX) configuration.

In a fourth aspect, a communication method is provided, which includes: receiving, by a fifth network entity, second information transmitted by a fourth network entity, where the second information is used to trigger the fifth network entity to determine jitter information of a target service flow between the fifth network entity and a third network entity; and transmitting, by the fifth network entity, first jitter information to the fourth network entity, where the first jitter information includes the jitter information of the target service flow between the fifth network entity and the third network entity.

In a fifth aspect, a communication method is provided, which includes: transmitting, by a fourth network entity, fifth information to a first network entity, where the fifth information is used to trigger the first network entity to determine jitter information of a target service flow between a second network entity and a third network entity.

In a sixth aspect, a communication method is provided, which includes: transmitting, by a terminal device, seventh information to a first network entity, where the seventh information is used to trigger the first network entity to determine target jitter information of a target service flow between a second network entity and a third network entity.

In a seventh aspect, a communication apparatus is provided, which includes: an obtaining unit, configured to obtain first jitter information and/or first delay information; and a determining unit, configured to determine target jitter information of a target service flow between a second network entity and a third network entity according to the first jitter information and/or the first delay information.

In an eighth aspect, a communication apparatus is provided, which includes: a transmitting unit, configured to transmit first information to a fourth network entity, where the first information is used to trigger the fourth network entity to determine target jitter information of a target service flow between a second network entity and a third network entity.

In a ninth aspect, a communication apparatus is provided, which includes: a receiving unit, configured to receive target jitter information of a target service flow between the apparatus and a third network entity transmitted by a fourth network entity; and a configuring unit, configured to perform connected mode discontinuous reception (CDRX) configuration based on the target jitter information.

In a tenth aspect, a communication apparatus is provided, which includes: a receiving unit, configured to receive second information transmitted by a fourth network entity, where the second information is used to trigger the apparatus to determine jitter information of a target service flow between the apparatus and a third network entity; and a transmitting unit, configured to transmit first jitter information to the fourth network entity, where the first jitter information includes the jitter information of the target service flow between the apparatus and the third network entity.

In an eleventh aspect, a communication apparatus is provided, which includes: a transmitting unit, configured to transmit fifth information to a first network entity, where the fifth information is used to trigger the first network entity to determine jitter information of a target service flow between a second network entity and a third network entity.

In a twelfth aspect, a communication apparatus is provided, which includes: a transmitting unit, configured to transmit seventh information to a first network entity, where the seventh information is used to trigger the first network entity to determine target jitter information of a target service flow between a second network entity and a third network entity.

In the thirteenth aspect, a communication apparatus is provided, which includes a memory, a transceiver and a processor, where the memory is configured to store a program, the processor receives and transmits data via the transceiver, and the processor is configured to call the program in the memory, to enable the communication apparatus to perform the method according to any one of the first aspect to sixth aspect.

In a fourteenth aspect, a communication apparatus is provided, which includes a processor, configured to call a program from a memory, to enable the communication apparatus to perform the method according to any one of the first aspect to sixth aspect.

In a fifteenth aspect, a chip is provided, which includes a processor, configured to call a program from a memory, to enable a device equipped with the chip to perform the method according to any one of the first aspect to sixth aspect.

In a sixteenth aspect, a computer-readable storage medium is provided, which configured to store a program, where the program enables a computer to perform the method according to any one of the first aspect to sixth aspect.

In the seventeenth aspect, a computer program product is provided, which includes a program, where the program enables a computer to perform the method according to any one of the first aspect to sixth aspect.

In an eighteenth aspect, a computer program is provided, where the computer program enables a computer to perform the method according to any one of the first aspect to sixth aspect.

In the embodiments of the present application, the first network entity obtains the first jitter information and/or the first delay information, and determines the target jitter information of the target service flow between the second network entity and the third network entity according to the first jitter information and/or the first delay information, which helps the second network entity to perform CDRX configuration based on the target jitter information, so as to make the CDRX configuration more suitable for the characteristics of the service flow, thereby optimizing power saving effect.

### BRIEF DESCRIPTION OF THE DRAWINGS

FIG. 1 is a schematic diagram of a wireless communication system applied in embodiments of the present application.
FIG. 2 is a schematic diagram of a 5GS architecture in an embodiment of the present application.
FIG. 3 is a schematic diagram of data transmission delay in an embodiment of the present application.
FIG. 4 is a schematic flowchart of a communication method provided by an embodiment of the present application.
FIG. 5 is a schematic flowchart of a communication method provided by another embodiment of the present application.
FIG. 6 is a schematic flowchart of a communication method provided by yet another embodiment of the present application.
FIG. 7 is a schematic flowchart of a communication method provided by still another embodiment of the present application.
FIG. 8 is a schematic flowchart of a communication method provided by still yet another embodiment of the present application.
FIG. 9 is a schematic structural diagram of a communication apparatus provided by an embodiment of the present application.
FIG. 10 is a schematic structural diagram of a communication apparatus provided by another embodiment of the present application.
FIG. 11 is a schematic structural diagram of a communication apparatus provided by yet another embodiment of the present application.
FIG. 12 is a schematic structural diagram of a communication apparatus provided by still another embodiment of the present application.
FIG. 13 is a schematic structural diagram of a communication apparatus provided by still another embodiment of the present application.
FIG. 14 is a schematic structural diagram of a communication apparatus provided by yet still another embodiment of the present application.
FIG. 15 is a schematic structural diagram of an apparatus provided by an embodiment of the present application.

### DETAILED DESCRIPTION

Technical solution of the present application will be described below with reference to the accompanying drawings.

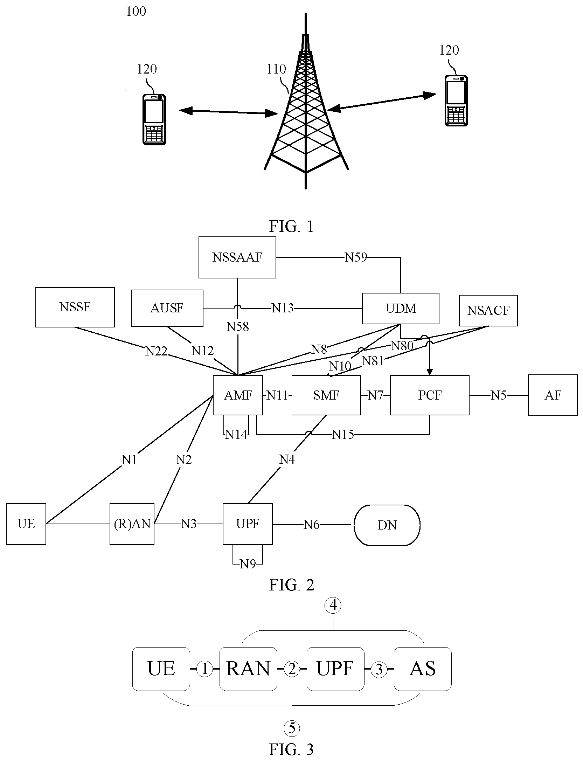

FIG. 1 illustrates a wireless communication system 100 applied in the embodiments of the present application. The wireless communication system 100 may include a network device 110 and user equipment (UE) 120. The network device 110 may communicate with the UE 120. The network device 110 may provide communication coverage for a specific geographic area and may communicate with the UE 120 located within the coverage area. The UE 120 may access a network (e.g., a wireless network) via the network device 110.

FIG. 1 exemplarily shows a network device and two UEs. Optionally, the wireless communication system 100 may include multiple network devices, other numbers of terminal devices may be located in coverage areas of different network devices, which is not limited in the embodiments of the present application. Optionally, the wireless communication system 100 may further include other network entities, such as a network controller and a mobility management entity, which is not limited in the embodiments of the present application.

It should be understood that the technical solutions of the embodiments of the present application may be applied to various communication systems, such as: a 5th generation (5G) system or new radio (NR), a long term evolution (LTE) system, an LTE frequency division duplex (FDD) system, LTE time division duplex (TDD). The technical solution provided by the present application may further be applied to future communication systems, for example, a 6th generation mobile communication system, or a satellite communication system.

The UE in the embodiments of the present application may also be referred to as a terminal device, an access terminal, a user unit, a user station, a mobile site, a mobile station (MS), a mobile terminal (MT), a remote station, a remote terminal, a mobile device, a user terminal, a terminal, a wireless communication device, a user agent or a user apparatus. The UE in the embodiments of the present application may refer to a device that provides voice and/or data connectivity to a user and may be used to connect people, objects and machines, such as a handheld device or an in-vehicle device with wireless connection functions. The UE in the embodiments of the present application may be a mobile phone, a pad, a laptop computer, a handheld computer, a mobile internet device (MID), a wearable device, a virtual reality (VR) device, an augmented reality (AR) device, a wireless terminal in industrial control, a wireless terminal in self driving, a wireless terminal in a remote medical surgery, a wireless terminal in a smart grid, a wireless terminal in transportation safety, a wireless terminal in a smart city, a wireless terminal in a smart home, or the like. Optionally, the UE may act as a base station. For example, the UE may act as a scheduling entity that provides sidelink signals among UEs in V2X or D2D. For example, a cellular phone and a car communicate with each other using sidelink signals. The cellular phone and a smart home device communicate with each other without relaying communication signals through base station.

The network device in the embodiments of the present application may be a device for communicating with UE, and the network device may also be referred to as an access network device or a wireless access network device, for example, a base station. The network device in the embodiments of the present application may refer to a radio access network (RAN) node (or device) that accesses the UE to a wireless network. The base station may be generalized to cover following various names, or be substituted with following names, such as: NodeB, evolved base station (evolved NodeB, eNB), next generation base station (next generation NodeB, gNB), relay station, access point, transmitting and receiving point (TRP), transmitting point (TP), master station (MeNB), secondary station (SeNB), multi-standard radio (MSR) node, home base station, network controller, access node, wireless node, access point (AP), transmission node, transceiving node, base band unit (BBU), remote radio unit (RRU), active antenna unit (AAU), remote radio head (RRH), central unit (CU), distributed unit (DU), positioning node. The base station may be a macro base station, a micro base station, a relay node, a donor node, or the like, or a combination thereof.

In some embodiments, the network device may be fixed or mobile. For example, a helicopter or a drone may be configured to act as a mobile network device, and one or more cells may move based on the location of the mobile network device. In other examples, the helicopter or the drone may be configured to be used as a device for communicating with another network device. In some embodiments, the network device may refer to a CU or a DU, or the network device may include the CU and the DU, or the network device may further include an AAU.

It should be understood that network device may be deployed on land, including indoors or outdoors, handheld or in-vehicle; it may also be deployed on water; it may also be deployed on airplanes, balloons and satellites in the air. The scenarios in which the network device is located are not limited in the embodiments of the present application.

It should also be understood that all or a portion of functions of the network device and UE in the present application may also be implemented through software functions running on hardware, or through virtualization functions instantiated on a platform (e.g., a cloud platform).

The solution in the embodiments of the present application is described below by taking FIG. 2 as an example.

FIG. 2 illustrates a structure diagram of a 5G system (5GS), which includes: a network slice specific authentication and authorization function (NSSAAF), a network slice selection function (NSSF), an authentication server function (AUSF), a unified data management (UDM), a network slice admission control function (NSACF), an access and mobility management function (AMF), a session management function (SMF), a policy control function (PCF), an application function (AF), a UE, a radio access network (RAN), a user plane function (UPF), a data network (DN) and other network elements.

The embodiments of the present application involve a terminal device (UE), an access network element (RAN), a control plane network element (e.g., PCF, SMF), a user plane network element (e.g., UPF), and an application server (AS). The DN may implement functions of a user plane part of the application server, and the AF may implement functions of a control plane part of the application server. Optionally, the access network element may be the network device 110 in FIG. 1, and the terminal device may be the terminal device 120 in FIG. 1.

Currently, 5GS supports quality of service (QoS) monitoring mechanism. The QoS monitoring mechanism is introduced below.

QoS monitoring is mainly used for packet delay measurement. Packet delay between a UE and an anchor UPF consists of two parts: uplink and downlink packet delay of an access network part defined in the specification TS38.314 of the 3rd generation partnership project (3GPP) and uplink and downlink packet delay between a base station and an anchor UPF. The base station needs to provide QoS monitoring for uplink and downlink packet delay measurement in the access network. QoS monitoring of the uplink and downlink packet delay between the base station and the anchor UPF may be performed at different granularity levels, i.e., each QoS flow level for each UE, or each user plane part of general packet radio service (GPRS) tunnel protocol (GTP-U) path level, which depends on configuration of operators, third-party application requests, and the PCF policy control for ultra-reliable and low latency communications (URLLC) services.

If a QoS monitoring request is received from the AF, the PCF will generate an authorized QoS monitoring policy according to a service data flow. The PCF puts the authorized QoS monitoring policy into a PCC rule and provides the authorized QoS monitoring policy to the SMF.

The SMF may activate end-to-end uplink and downlink packet delay measurement between a UE and an anchor UPF for a QoS flow during a process of packet data unit (PDU) session establishment or modification. SMF transmits a QoS monitoring request message to the anchor UPF through a N4 interface and to the base station through N2 signaling, to start QoS monitoring between the anchor UPF and the base station. Monitoring parameters in the QoS monitoring request message may be obtained by the SMF based on a QoS monitoring policy of the PCF or its local configuration. After the base station receives the QoS monitoring request message from the SMF, the base station starts measuring the uplink and downlink packet delay of the access network part, and reports the measurement result to the anchor UPF via an uplink data packet. If the base station and the anchor UPF are synchronized, one-way packet delay monitoring between the base station and the anchor UPF may be supported. If the base station and the anchor UPF are not synchronized, it is necessary to assume that uplink packet delay and downlink packet delay between the base station and anchor UPF are the same. For both cases, the anchor UPF will create monitoring packets and transmit them to the base station at a certain measurement frequency. The measurement frequency is determined by the anchor UPF according to the frequency of the QoS monitoring report received from the SMF.

The process of QoS monitoring is as follows.
1. The anchor UPF encapsulates a QoS flow identifier (QFI), a QoS monitoring packet indication, and a local time T1 into the GTP-U packet header. The QoS monitoring packet indication is used to indicate that this data packet is used for uplink and downlink packet delay measurement, and the local time is a time when the anchor UPF transmits a downlink monitoring packet.
2. The base station records the local time T1 in the received GTP-U packet header and a time T2 when the downlink monitoring packet is received.
3. When the base station receives an uplink data packet corresponding to a QFI from the UE or the base station transmits a virtual uplink data packet as a monitoring response, the base station encapsulates the QoS monitoring packet indication, a packet delay measurement result of the access network, the local time T1, T2 and a monitoring response packet transmitting time T3 into a GTP-U packet header of the monitoring response packet. The response packet is transmitted to the UPF through a N3 interface. When the base station transmits the virtual uplink data packet as the monitoring response to the anchor UPF depends on the implementation of the base station.
4. When the anchor UPF receives the monitoring response packet, the anchor UPF records a local time T4, and calculates round-trip delay between the base station and the anchor UPF (if they are not synchronized) or the uplink and downlink packet delay (if they are synchronized) according to the time information included in the GTP-U header of the monitoring response packet. If the base station and the anchor UPF are not synchronized, the anchor UPF obtains packet delay between itself and the base station by calculating (T2-T1+T4-T3)/2. If the base station and the anchor UPF are synchronized, the anchor UPF may obtain the uplink packet delay through (T4-T3) and the downlink packet delay through (T2-T1). The anchor UPF may calculate uplink and downlink packet delay between the anchor UPF and the UE based on a received uplink and downlink packet delay result of the access network and the uplink and downlink packet delay between the base station and the anchor UPF calculated above. When certain specific conditions are met (e.g., a reporting threshold is reached), the anchor UPF reports the above calculation result to the SMF. Obviously, if the base station and anchor UPF are not synchronized, the calculation result of the uplink and downlink packet delay may be inaccurate.

The "packet" mentioned in the above process of QoS monitoring may refer to as a data packet transmitted based on a real-time transport protocol (RTP). A receiver of RTP transmission may provide reception quality feedback by using a sender report (SR) packet or a receiver report (RR) packet of an RTP control protocol (RTCP). An interarrival jitter field in the SR/RR may provide feedback on a statistical variance estimation value of interarrival time of the RTP data packet. The interarrival jitter field may be defined as a difference in end-to-end transmission delay between two adjacent data packets.

In CDRX configuration, jitter information of a data packet between the AS and the RAN (such as ④ in FIG. 3) needs to be provided to the RAN before transmitting a service, to facilitate the RAN to perform the CDRX configuration based on the jitter information, to make the CDRX configuration more suitable for the characteristics of the service flow, thereby optimizing power saving effect.

However, the above QoS monitoring mechanism can only measure delay of the access network part (such as ① in FIG. 3) and delay of a core network part (such as ② in FIG. 3), and the application server can only measure server-side jitter caused by factors such as encoder load and content complexity, or obtain the end-to-end jitter estimation value (such as ⑤ in FIG. 3) through the interarrival jitter information in the SR/RR data packet. In a case where the UE or the AS has received a certain number of uplink/downlink data packets, the end-to-end jitter estimation value may be estimated and transmitted to the peer through the SR/RR data packet. Therefore, jitter information of the data packet between the AS and the RAN (such as ④ in FIG. 3) cannot be calculated by the existing QoS monitoring mechanism, and the AS cannot directly provide the jitter information to the core network.

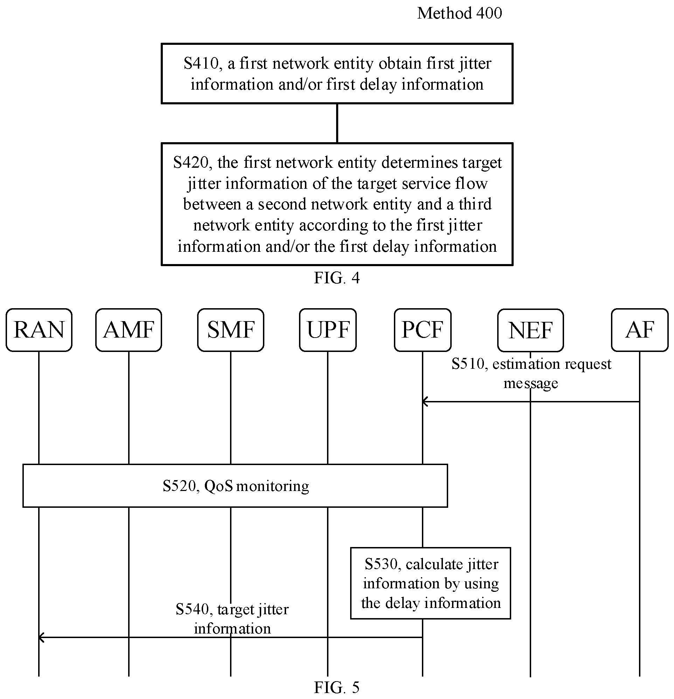

In order to solve one or more of the above technical problems, the present application proposes communication methods and communication apparatuses, which can determine jitter information between a second network entity (e.g., the RAN) and a third network entity (e.g., the AS). The embodiments of the present application are described in detail below with reference to FIGS. 4 to 8.

FIG. 4 is a schematic flowchart of a communication method provided by the embodiments of the present application. The method 400 illustrated in FIG. 4 may include steps S410 and S420, which are specifically as follows.

S410, a first network entity obtain first jitter information and/or first delay information.

The first network entity may be a PCF or a RAN.

Optionally, the first jitter information may refer to jitter information corresponding to a target service flow, or may refer to jitter information of a data packet (e.g., an application layer data packet) corresponding to the target service flow. The jitter information may include a jitter value, and may further include: a jitter range (e.g., a maximum value and a minimum value), a jitter average value, a jitter variance, or the like. The target service flow may refer to a service flow transmitted based on the real-time transport protocol (RTP).

Optionally, the first delay information may refer to transmission delay of the data packet corresponding to the target service flow. Optionally, the first delay information may be determined by the QoS monitoring mechanism in the above embodiments.

S420, the first network entity determines target jitter information of the target service flow between a second network entity and a third network entity according to the first jitter information and/or the first delay information.

Optionally, the target jitter information may be a jitter value of the target service flow. Optionally, multiple piece of target jitter information may be obtained by the above method, and at least one of the following items may be calculated based on the multiple piece of target jitter information: a jitter range of the target service flow (e.g., a maximum value and a minimum value of the target service flow), a jitter average value of the target service flow, and a jitter variance of the target service flow.

Furthermore, the RAN may perform CDRX configuration based on the target jitter information.

In the embodiments of the present application, the first network entity obtains the first jitter information and/or the first delay information, and determines the target jitter information of the target service flow between the second network entity and the third network entity according to the first jitter information and/or the first delay information, which helps the second network entity to perform CDRX configuration based on the target jitter information, so as to make the CDRX configuration more suitable for the characteristics of the service flow, thereby optimizing power saving effect.

In the present application, combining with the QoS monitoring mechanism, an interarrival jitter field and a timestamp field in the existing RTCP or RTP data packet are utilized, to obtain data packet jitter information between the second network entity and the third network entity (such as ④ in FIG. 3).

Optionally, according to different manners of calculating the jitter information, the manners of jitter information estimation may include following manners.

### Manner 1: AF-assisted jitter information estimation

Optionally, the first network entity may be the PCF.

A sixth network entity may transmit first information to a fourth network entity, where the first information may be used to trigger the first network entity to determine the target jitter information of the target service flow between the second network entity and the third network entity. Optionally, the sixth network entity may transmit third information to the fourth network entity, where the third information is used to determine the target service flow.

The first jitter information may include jitter information of the target service flow between a terminal device and the third network entity.

The first delay information may include at least one of the following: delay information of the target service flow between the terminal device and the second network entity; and delay information of the target service flow between the terminal device and a fifth network entity, and delay information of the target service flow between the second network entity and the fifth network entity.

Optionally, the first network entity may obtain the first jitter information and the first delay information. The first jitter information may be determined by the sixth network entity. For example, the sixth network entity may determine historical jitter information of the target service flow between the terminal device and the third network entity as the first jitter information; or the sixth network entity may further determine the first jitter information by an interarrival jitter field in a header of a second data packet. The second data packet may be a data packet between the terminal device and the third network entity corresponding to the target service flow.

For example, in the above S410, the first network entity may receive the first jitter information transmitted by the sixth network entity; the first network entity may obtain the first delay information through QoS monitoring. Optionally, one or more of the first jitter information, the first information and the third information may be transmitted simultaneously by the sixth network entity.

It should be noted that, the order of which the first network entity obtains the first jitter information and the first delay information will not be limited in the present application. For example, the first network entity may obtain the first jitter information before obtaining the first delay information; or the first network entity may obtain the first delay information before obtaining the first jitter information; or the first network entity may obtain the first jitter information and the first delay information at the same time.

Optionally, the first network entity may further determine second jitter information according to the first delay information. The second jitter information may include jitter information of the target service flow between the terminal device and the second network entity. Optionally, the second jitter information may further include at least one of the following: jitter information of the target service flow between the terminal device and the fifth network entity, and jitter information of the target service flow between the second network entity and the fifth network entity.

Furthermore, in the above S420, the first network entity may subtract the jitter information of the target service flow between the terminal device and the second network entity from the first jitter information, to obtain the target jitter information.

The first network entity may transmit the target jitter information to the second network entity. Furthermore, the second network entity may perform CDRX configuration based on the target jitter information.

For example, the second network entity may perform CDRX configuration based on the target jitter information and at least one of the following: jitter information of the target service flow between the third network entity and the fifth network entity, jitter information of the target service flow between the second network entity and the fifth network entity, jitter information of the target service flow between the terminal device and the second network entity, the jitter information of the target service flow between the terminal device and the second network entity, and the jitter information of the target service flow between the terminal device and the third network entity.

For example, in Manner 1, the sixth network entity may provide end-to-end jitter information recorded after last interaction with a target UE to the first network entity, or after the application server has completed a period of data interaction with the UE, provide statistical end-to-end jitter information to the first network entity. The first network entity may continuously initiate at least two QoS monitoring, to obtain two measurement results including a first part (between the UE and the second network entity) delay, or a second part (between the second network entity and the fifth network entity) delay and delay between the UE and the fifth network entity, and to calculate a jitter value of a part of the RAN based on the two measurement results. Finally, the first network entity may calculate the jitter information between the second network entity and the third network entity through an end-to-end jitter value and a first part jitter value, and transmit the jitter information to the second network entity. As an example, the first network entity is a PCF, the second network entity is a RAN, the third network entity is an AS, the fifth network entity is a UPF, and the sixth network entity is an AF, the embodiments of Manner 1 will be described in detail in conjunction with FIG. 5. As shown in FIG. 5, the method 500 includes steps S510 to S540, which are specifically as follows.

S510, the AF transmits an estimation request message to the PCF.

The AF transmits the estimation request message to the PCF through a network exposure function (NEF).

The estimation request message may include end-to-end jitter information between the AS and the UE. For example, the jitter information may include an end-to-end jitter value between the AS and the UE, and may further include a jitter range (a maximum value, a minimum value), a jitter average value, a jitter variance, or the like. The jitter information may be jitter information corresponding to the target service flow.

The end-to-end jitter information may be determined by the AF, for example, it may be end-to-end jitter information in the history after the AS interacted with the target UE in the past (the history may be stored on the UE side or the AS side), or it may be obtained from the interarrival jitter field carried in a header of the SR/RR data packet after the AS has interacted with the UE for a period of time.

In addition, the estimation request message may further include indication information for triggering the PCF to estimate the target jitter information corresponding to the target service flow; the estimation request message may further include flow description information for determining the target service flow.

In S520, the PCF initiates QoS monitoring.

The PCF may initiate multiple times of QoS monitoring to obtain multiple piece of delay information. The delay information may include at least one of the following:
a delay between the UE and the UPF, a delay of the RAN part (between the UE and the RAN), and a delay of the core network (CN) part (between the RAN and the UPF).

In S530, the PCF calculates jitter information by using the delay information.

The PCF may calculate at least one of the following items by using the multiple piece of delay information obtained by QoS monitoring:
a jitter of the service flow between the UE and the UPF, a jitter of the RAN part, and a jitter of the CN part.

For example, assuming that the delay of the CN part obtained at an i-th time is Dᵢ, the jitter of the CN part may be calculated by (Dᵢ₊₁-Dᵢ), where i is a positive integer. The jitter of the RAN part may also be calculated in the similar way.

In this case, by triggering multiple times of QoS monitoring to perform jitter information estimation, a jitter range (a minimum value, a maximum value), a jitter average value, a jitter variance and other information may be obtained statistically.

Then, the PCF may obtain jitter information between the AS and the RAN by subtracting jitter information of the RAN part from the jitter information between the AS and the UE. Furthermore, the PCF may obtain multiple piece of jitter information between the AS and the RAN, and calculate a jitter range, a jitter average value, a jitter variance of service flow transmission between the AS and the RAN based on the multiple piece of jitter information.

Similarly, the PCF may obtain jitter information between the UPF and the AS by subtracting the jitter information of the service flow between the UE and the UPF from the jitter information between the AS and the UE.

In S540, the PCF transmits target jitter information to the RAN.

The PCF may provide estimated jitter information of the service flow to the RAN, to facilitate the RAN to perform CDRX configuration. The jitter information of the service flow may include at least one of the following:
the jitter range, the jitter average value, the jitter variance of the service flow transmission between the AS and the RAN;
a jitter range, a jitter average value, a jitter variance of the service flow transmission between the AS and the UPF;
a jitter range, a jitter average value, a jitter variance of the service flow of the CN part;
a jitter range, a jitter average value, a jitter variance of the service flow of the RAN part;
a jitter range, a jitter average value, a jitter variance of the service flow between the UE and the UPF; and
a jitter range, a jitter average value, a jitter variance of an end-to-end service flow between the UE and the AS.

### Manner 2: UPF-assisted jitter information estimation

Optionally, the first network entity is the PCF.

The sixth network entity may transmit first information to the first network entity, where the first information may be used to trigger the first network entity to determine target jitter information of the target service flow between the second network entity and the third network entity. Optionally, the sixth network entity may transmit third information to the first network entity, where the third information is used to determine the target service flow. Optionally, the first information and the third information may or may not be transmitted simultaneously by the sixth network entity.

The first jitter information may include jitter information of the target service flow between the fifth network entity and the third network entity.

The first delay information may include the delay information of the target service flow between the second network entity and the fifth network entity. Optionally, the first delay information may further include at least one of the following: the delay information of the target service flow between the terminal device and the fifth network entity, and the delay information of the target service flow between the terminal device and the second network entity.

Optionally, the first network entity may obtain the first jitter information and the first delay information. The first jitter information may be determined by the fifth network entity. Optionally, the fifth network entity may calculate the first jitter information through N third data packets, where N is an integer greater than or equal to 2. A third data packet may be a data packet between the fifth network entity and the third network entity corresponding to the target service flow. For example, the fifth network entity may obtain the first jitter information according to a time when each date packet in the N third data packets arrives at the fifth network entity and a timestamp field in a header of each data packet.

For example, in the above S410, the first network entity may receive first jitter information transmitted by the fifth network entity; where the first network entity may obtain the first delay information through QoS monitoring.

It should be noted that, the order of which the first network entity obtains the first jitter information and the first delay information will not be limited in the present application. For example, the first network entity may obtain the first jitter information before obtaining the first delay information; or the first network entity may obtain the first delay information before obtaining the first jitter information; or the first network entity may also simultaneously obtain the first jitter information and the first delay information.

The first network entity may further transmit second information to the fifth network entity, where the second information may be used to trigger the fifth network entity to determine jitter information of the target service flow between the fifth network entity and the third network entity. The first network entity may further tranmsit fourth information to the fifth network entity, where the fourth information may be used to determine the target service flow. Optionally, the second information and the fourth information may or may not be transmitted simultaneously by the first network entity.

The first network entity may further determine third jitter information according to the first delay information. The third jitter information may include jitter information of the target service flow between the second network entity and the fifth network entity. Optionally, the third jitter information may further include at least one of the following: jitter information of the target service flow between the terminal device and the fifth network entity, and jitter information of the target service flow between the terminal device and the second network entity.

Furthermore, in the above S420, the first network entity may add the first jitter information to the jitter information of the target service flow between the second network entity and the fifth network entity, to obatin the target jitter information.

The first network entity may transmit the target jitter information to the second network entity. Furthermore, the second network entity may perform CDRX configuration based on the target jitter information.

For example, the second network entity may perform the CDRX configuration based on the target jitter information and at least one of the following: jitter information of the target service flow between the third network entity and the fifth network entity, jitter information of the target service flow between the second network entity and the fifth network entity, jitter information of the target service flow between the terminal device and the second network entity, jitter information of the target service flow between the terminal device and the fifth network entity, and jitter information of the target service flow between the terminal device and the third network entity.

For example, in Manner 2, the fifth network entity may read a header of an application layer data packet to obtain a timestamp; the fifth network entity may calculate jitter information between the third network entity and the fifth network entity according to times when at least two data packets arrive at the fifth network entity and their timestamps, and tranmsit the calculating result to the first network entity. The first network entity continuously initiates at least two times of QoS monitoring to obtain two measurement results including a first part (between the UE and the second network entity) delay, or a second part (between the second network entity and the fifth network entity) delay and the delay between the UE and the fifth network entity, and calculates a jitter value of the first part according to the two measurement results. Finally, the first network entity may calculate jitter information between the second network entity and the third network entity through an end-to-end jitter value and the jitter value of the first part, and tranmsit the jitter information to the second network entity.

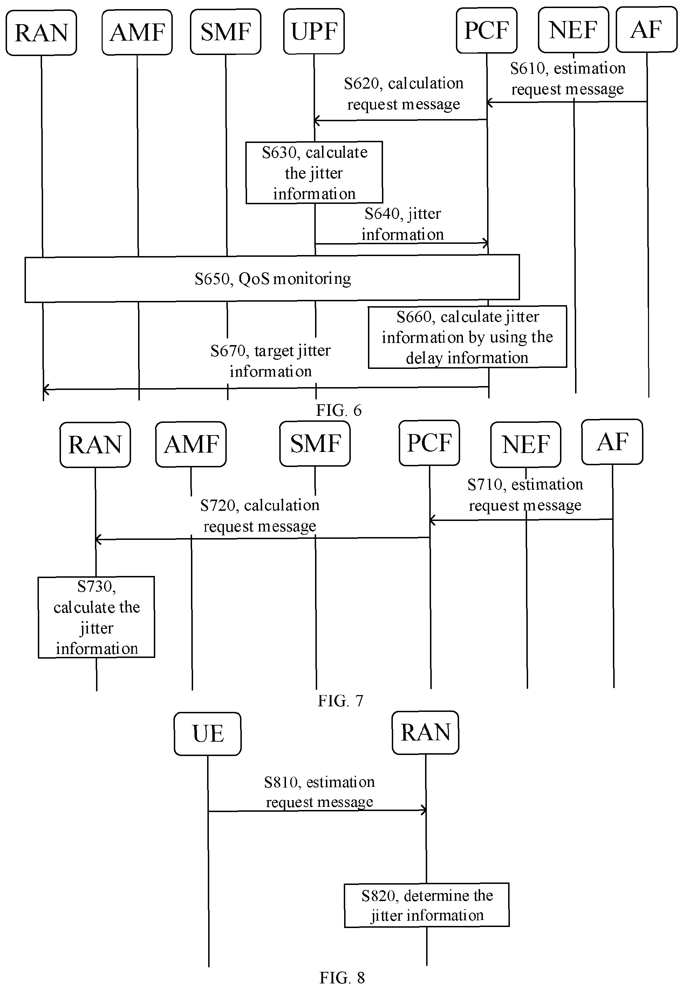

As an example, the first network entity is a PCF, the second network entity is a RAN, the third network entity is an AS, the fifth network entity is a UPF, and the sixth network entity is an AFi, the embodiments of Manner 2 will be described in detail in conjunction with FIG. 6. As shown in FIG. 6, the method 600 includes steps S610 to S670, which are specifically as follows.

S610, the AF transmits an estimation request message to the PCF.

The AF transmits the estimation request message to the PCF through a NEF.

The estimation request message may further include indication information for triggering the PCF to estimate the target jitter information corresponding to the target service flow; where the estimation request message may further include flow description information for determining the target service flow.

In S620, the PCF transmits a calculation request message to the UPF.

The calculation request message may include the indication information and the flow description information. For example, the PCF may tranmsit the indication information and the flow description information to the UPF, to trigger the UPF to calculate jitter information of the target service flow between the UPF and the AS.

S630, the UPF calculates the jitter information.

The UPF may read a timestamp field in the header of the application layer data packet to calculate the jitter information of the target service flow between the UPF and the AS. For example, a time when an i-th data packet arrives at the UPF is denoted as Tᵢ, and the data packet transmitting time indicated by the timestamp field recorded in the header of the application layer data packet is Sᵢ. The jitter information of the target service flow between the UPF and the AS may be calculated by (Tᵢ₊₁-Sᵢ₊₁)-(Tᵢ-Sᵢ). Obviously, at least two data packets are needed to calculate jitter information of the service flow. In a case where the number of data packets detected by the UPF increases (more than two data packets), a jitter range, a jitter average value, and a variance of the service flow between the UPF and the AS may be calculated.

In S640, the UPF transmits the jitter information to the PCF.

The UPF may feed back the jitter information of the target service flow between the UPF and the AS to the PCF.

In S650, the PCF initiates QoS monitoring.

PCF may initiate multiple times of QoS monitoring to obtain multiple piece of delay information. The delay information may include at least one of the following:
a delay between the UE and the UPF, a delay of the RAN part (between UE and RAN), and a delay of a core network (CN) part (between the RAN and the UPF).

Optionally, step S650 may be performed at any time among S610 to S660.

In S660, the PCF calculates jitter information by using the delay information.

The PCF may calculate at least one of the following items by using the multiple piece of delay information obtained by QoS monitoring:
jitter information of the service flow between the UE and the UPF, jitter information of the RAN part, and jitter information of the CN part.

By combining the jitter information of the target service flow between the UPF and the AS measured by the UPF with results obtained through QoS monitoring, end-to-end jitter information between the UE and the AS and jitter information between the AS and the RAN may be calculated. Furthermore, the PCF may obtain multiple piece of end-to-end jitter information between the UE and the AS and multiple piece of jitter information between the AS and the RAN, and calculate at least one of the following based on these jitter information:
a jitter range, a jitter average value, and a jitter variance of the end-to-end service flow between the UE and the AS; and
a jitter range, a jitter average value, and a jitter variance of service flow transmission between the AS and the RAN.

In S670, the PCF transmits the target jitter information to the RAN.

The PCF may provide estimated jitter information of service flow to the RAN, to facilitate the RAN to perform CDRX configuration. The jitter information of the service flow may include at least one of the following:
the jitter range, the jitter average value, and the jitter variance of the service flow transmission between the AS and the RAN;
the jitter range, the jitter average value, and the jitter variance of the service flow transmission between the AS and the UPF;
a jitter range, a jitter average value, and a jitter variance of the service flow of the CN part;
a jitter range, a jitter average value, and a jitter variance of the service flow of the RAN part;
a jitter range, a jitter average value, and a jitter variance of the service flow between the UE and the UPF; and
the jitter range, the jitter average value, and the jitter variance of the end-to-end service flow between the UE and the AS.

### Manner 3: jitter information estimation based on RAN detection

The first network entity may be a RAN.

The fourth network entity may transmit fifth information to the first network entity, where the fifth information may be used to trigger the first network entity to determine target jitter information of the target service flow between the second network entity and the third network entity. Optionally, the fourth network entity may tranmsit sixth information to the first network entity, where the sixth information may be used to determine the target service flow. Optionally, the fifth information and the sixth information may or may not be transmitted simultaneously by the fourth network entity.

The first jitter information may include jitter information of the target service flow between the second network entity and the third network entity.

Optionally, the first network entity may obtain the first jitter information. Optionally, the first network entity may calculate the first jitter information through N first data packets, where N is an integer greater than or equal to 2. A first data packet may be a data packet between the second network entity and the third network entity corresponding to the target service flow. For example, in the above S410, the first network entity may obtain the first jitter information according to a time when each data packet in the N first data packets arrives at the second network entity and a timestamp field in a header of each data packet.

Furthermore, the first network entity may perform CDRX configuration based on the target jitter information.

For example, in manner 3, the first network entity may read a header of the application layer data packet to obtain a timestamp; where the first network entity may calculate jitter information between the second network entity and the third network entity through a time when at least two data packets arrive at the second network entity and their timestamps.

As an example, the first network entity is a RAN, the second network entity is a RAN, the third network entity is an AS, the fourth network entity is a PCF, and the fifth network entity is a UPF, and the embodiments of Manner 3 will be described in detail in conjunction with FIG. 7. As shown in FIG. 7, the method 700 includes steps S710 to S730, which are specifically as follows.

S710, the AF transmits an estimation request message to the PCF.

The AF transmits the estimation request message to the PCF through a NEF.

The estimation request message may further include indication information for triggering the PCF to estimate the target jitter information corresponding to the target service flow; where the estimation request message may further include flow description information for determining the target service flow.

In S720, the PCF transmits a calculation request message to the RAN.

The calculation request message may include the indication information and the flow description information. For example, the PCF may tranmsit the calculation request message to the RAN through an AMF or an SMF, to trigger the RAN to calculate jitter information of the target service flow between the RAN and the AS.

In S730, the RAN calculates the jitter information.

The RAN may read a timestamp field in the header of the application layer data packet to calculate the jitter information of the target service flow between the RAN and the AS. For example, a time when an i-th data packet arrives at the RAN is denoted as Tᵢ, and the data packet transmitting time indicated by the timestamp field recorded in the header of the application layer data packet is Sᵢ. The jitter information of the target service flow between the RAN and the AS may be calculated by (Tᵢ₊₁-Sᵢ₊₁)-(Tᵢ-Sᵢ). Obviously, at least two data packets are needed to calculate jitter information of the service flow. In a case where the number of data packets detected by the UPF increases (more than two data packets), a jitter range, a jitter average value, and a variance of the service flow between the RAN and the AS may be calculated.

Furthermore, the RAN may perform CDRX configuration according to the jitter information calculated by itself.

### Manner 4: UE-assisted jitter information estimation

The first network entity may be the RAN.

The terminal device may transmit seventh information to the first network entity, where the seventh information may be used to trigger the first network entity to determine jitter information of the target service flow between the second network entity and the third network entity. The terminal device may transmit eighth information to the first network entity, where the eighth information may be used to determine the target service flow. Optionally, the seventh information and the eighth information may or may not be transmitted simultaneously by the terminal device.

The first jitter information may include jitter information of the target service flow between the terminal device and the third network entity.

The first delay information may include delay information of the target service flow between the terminal device and the second network entity.

Optionally, the first network entity may obtain the first jitter information and the first delay information. The first jitter information may be determined by the terminal device. For example, the terminal device may determine historical jitter information of the target service flow between the terminal device and the third network entity as the first jitter information; or the terminal device may also determine the first jitter information by an interarrival jitter field in a header of a second data packet. The second data packet may be a data packet between the terminal device corresponding to the target service flow and the third network entity.

For example, in the above S410, the first network entity may receive the first jitter information transmitted by the terminal device; and the first network entity may obtain the first delay information. Optionally, the first network entity may obtain the first delay information through internal implementation, and the specific obtaining method is not limited in the present application. For example, the first network entity may perform data interaction with the UE and calculate the first delay information according to the transmission delay of the data.

Optionally, one or more of the first jitter information, the seventh information and the eighth information may be transmitted simultaneously by the terminal device.

It should be noted that, the order of which the first network entity obtains the first jitter information and the first delay information is not limited in the present application. For example, the first network entity may obtain the first jitter information before obtaining the first delay information; or the first network entity may obtain the first delay information before obtaining the first jitter information; or the first network entity may also obtain the first jitter information and the first delay information simultaneously.

Optionally, the first network entity may further determine fourth jitter information according to the first delay information. The fourth jitter information may include jitter information of the target service flow between the terminal device and the second network entity. Optionally, the fourth jitter information may further include at least one of the following: jitter information of the target service flow between the terminal device and the fifth network entity, and jitter information of the target service flow between the second network entity and the fifth network entity.

Furthermore, in the above S420, the first network entity may subtract the jitter information of the target service flow between the terminal device and the second network entity from the first jitter information, to obtain the target jitter information.

Furthermore, the first network entity may perform CDRX configuration based on the target jitter information.

For example, in Manner 4, the UE may provide end-to-end jitter information recorded after last interaction between an application server and a target UE to the first network entity, or provide the statistical end-to-end jitter information to the first network entity after the application server has completed a period of data interaction with the UE. Then the first network entity may measure the jitter information between the second network entity and the UE. Finally, the first network entity may calculate the jitter information between the second network entity and the third network entity by subtracting the service flow jitter between the second network entity and the UE from the end-to-end jitter information provided by the UE.

As an example, the first network entity is a RAN, the second network entity is a RAN, the third network entity is an AS, the fourth network entity is a PCF, and the fifth network entity is a UPF, the embodiments of the manner 4 will be described in detail in conjunction with FIG. 8. As shown in FIG. 8, the method 800 includes steps S810 and S820, which are specifically as follows.

S810, the UE transmits an estimation request message to the RAN.

The estimation request message may include end-to-end jitter information between the AS and the UE, for example, a jitter range (a maximum value, a minimum value), a jitter average value, a jitter variance. The jitter information may be jitter information corresponding to the target service flow.

The end-to-end jitter information may be determined by the UE, for example, it may be end-to-end jitter information in a history after the AS interacted with the UE in the past (the history may be stored on the UE side or the AS side), or it may be obtained from the interarrival jitter field carried in a header of the SR/RR data packet after the AS has interacted with the UE for a period of time.

In addition, the estimation request message may further include indication information for triggering the RAN to estimate the target jitter information corresponding to the target service flow; the estimation request message may further include flow description information for determining the target service flow.

In S820, the RAN determines the jitter information.

The RAN may measure delay information of the target service flow between the UE and the RAN, and calculate the jitter information of the target service flow between the UE and the RAN by using the delay information.

Next, the RAN may calculate jitter information corresponding to the target service flow between the RAN and the AS by subtracting the jitter information corresponding to the target service flow between the RAN and the UE from the end-to-end jitter information provided by the UE. Furthermore, the RAN may obtain multiple piece of jitter information corresponding to the target service flow between the RAN and the AS, and calculate a jitter range, a jitter average value, and a jitter variance corresponding to the target service flow between the RAN and the AS based on the multiple piece of jitter information.

Furthermore, the RAN may perform CDRX configuration according to the jitter information calculated by itself.

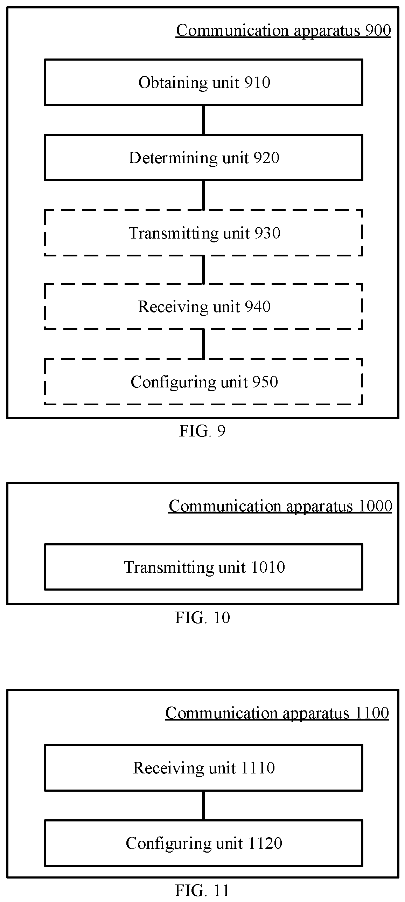

In conjunction with FIGS. 1 to 8, the method embodiments of the present application are described in detail above, and the apparatus embodiments of the present application will be described in detail below in conjunction with FIGS. 9 to 15. It should be understood that the description of the method embodiments and the description of the apparatus embodiments correspond to each other, and therefore, for parts that are not described in detail may refer to that of the method embodiments.

FIG. 9 is a schematic structural diagram of a communication apparatus provided in an embodiment of the present application. As shown in FIG. 9, the apparatus 900 includes an obtaining unit 910 and a determining unit 920, which are specifically as follows:
the obtaining unit 910 is configured to obtain first jitter information and/or first delay information; and
the determining unit 920 is configured to determine target jitter information of a target service flow between a second network entity and a third network entity according to the first jitter information and/or the first delay information.

Optionally, the first jitter information includes jitter information of the target service flow between a terminal device and the third network entity, and the first delay information includes at least one of the following: delay information of the target service flow between the terminal device and the second network entity; and delay information of the target service flow between the terminal device and a fifth network entity, and delay information of the target service flow between the second network entity and the fifth network entity; where the obtaining unit 910 is specifically configured to receive the first jitter information transmitted by a sixth network entity; and obtain the first delay information via quality of service QoS monitoring.

Optionally, the determining unit 920 is further configured to determine second jitter information according to the first delay information, where the second jitter information includes jitter information of the target service flow between the terminal device and the second network entity; and the determining unit 920 is specifically configured to subtract the jitter information of the target service flow between the terminal device and the second network entity from the first jitter information, to obtain the target jitter information.

Optionally, the second jitter information further includes at least one of the following: jitter information of the target service flow between the terminal device and the fifth network entity, and jitter information of the target service flow between the second network entity and the fifth network entity.

Optionally, the first jitter information includes jitter information of the target service flow between a fifth network entity and the third network entity, and the first delay information includes delay information of the target service flow between the second network entity and the fifth network entity; where the obtaining unit 910 is specifically configured to receive the first jitter information transmitted by the fifth network entity; and obtain the first delay information via quality of service (QoS) monitoring.

Optionally, the determining unit 920 is further configured to determine third jitter information according to the first delay information, where the third jitter information includes jitter information of the target service flow between the second network entity and the fifth network entity; and the determining unit 920 is specifically configured to add the first jitter information to the jitter information of the target service flow between the second network entity and the fifth network entity, to obtain the target jitter information.

Optionally, the first delay information further includes at least one of the following: delay information of the target service flow between the terminal device and the fifth network entity, and delay information of the target service flow between the terminal device and the second network entity; and the third jitter information further includes at least one of the following: jitter information of the target service flow between the terminal device and the fifth network entity, and jitter information of the target service flow between the terminal device and the second network entity.

Optionally, the apparatus 900 further includes a transmitting unit 930, configured to transmit the target jitter information to the second network entity.

Optionally, the apparatus 900 further includes a receiving unit 940, configured to receive first information transmitted by a sixth network entity, where the first information is used to trigger the first network entity to determine the target jitter information of the target service flow between the second network entity and the third network entity.

Optionally, the apparatus 900 further includes the receiving unit 940, configured to receive third information transmitted by the sixth network entity, where the third information is used to determine the target service flow.

Optionally, the apparatus 900 further includes the transmitting unit 930, configured to transmit second information to the fifth network entity, where the second information is used to trigger the fifth network entity to determine jitter information of the target service flow between the fifth network entity and the third network entity.

Optionally, the apparatus 900 further includes the transmitting unit 930, configured to transmit fourth information to the fifth network entity, where the fourth information is used to determine the target service flow.

Optionally, the apparatus 900 is a policy control function (PCF), the second network entity is a radio access network (RAN), the third network entity is an application server (AS), the fifth network entity is a user plane function (UPF), and a sixth network entity is an application function (AF).

Optionally, the first jitter information includes jitter information of the target service flow between the second network entity and the third network entity; where the obtaining unit 910 is specifically configured to calculate the first jitter information through N first data packets, where a first data packet is a data packet between the second network entity and the third network entity corresponding to the target service flow, and N is an integer greater than or equal to 2.

Optionally, the obtaining unit 910 is specifically configured to obtain the first jitter information according to a time when each data packet in the N first data packets arrives at the second network entity and a timestamp field in a header of each data packet.

Optionally, the apparatus 900 further includes a receiving unit 940, configured to receive fifth information transmittd by a fourth network entity, where the fifth information is used to trigger the second network entity to determine the target jitter information of the target service flow between the second network entity and the third network entity.

Optionally, the apparatus 900 further includes a receiving unit 940, configured to receive sixth information transmitted by a fourth network entity, where the sixth information is used to determine the target service flow.

Optionally, the first jitter information includes jitter information of the target service flow between a terminal device and the third network entity, and the first delay information includes delay information of the target service flow between the terminal device and the second network entity; where the obtaining unit 910 is specifically configured to receive the first jitter information transmitted by the terminal device; and obtain the first delay information.

Optionally, the determining unit 920 is further configured to determine fourth jitter information according to the first delay information, where the fourth jitter information includes jitter information of the target service flow between the terminal device and the second network entity; and the determining unit 920 is specifically configured to subtract the jitter information of the target service flow between the terminal device and the second network entity from the first jitter information, to obtain the target jitter information.

Optionally, the apparatus 900 further includes a receiving unit 940, configured to receive seventh information transmitted by the terminal device, where the seventh information is used to trigger the first network entity to determine jitter information of the target service flow between the second network entity and the third network entity.

Optionally, the apparatus 900 further includes a receiving unit 940, configured to receive eighth information transmitted by the terminal device, where the eighth information is used to determine the target service flow.

Optionally, the apparatus 900 further includes a configuring unit 950, configured to perform connected mode discontinuous reception (CDRX) configuration based on the target jitter information.

Optionally, the apparatus 900 is a radio access network (RAN), the second network entity is a RAN, the third network entity is an application server (AS), and the fourth network entity is a policy control function (PCF).

FIG. 10 is a schematic structural diagram of a communication apparatus provided by an embodiment of the present application. As shown in FIG. 10, the apparatus 1000 includes a transmitting unit 1010, which is specifically as follows:
the transmitting unit 1010 is configured to transmit first information to a fourth network entity, where the first information is used to trigger the fourth network entity to determine target jitter information of a target service flow between a second network entity and a third network entity.

Optionally, the transmitting unit 1010 is further configured to transmit third information to the fourth network entity, where the third information is used to determine the target service flow.

Optionally, the transmitting unit 1010 is further configured to tranmsit first jitter information to the fourth network entity, where the first jitter information includes jitter information of the target service flow between a terminal device and the third network entity.

Optionally, the first jitter information is historical jitter information of the target service flow between the terminal device and the third network entity, or the first jitter information is determined by an interarrival jitter field in a header of a second data packet, where the second data packet is a data packet between the terminal device and the third network entity corresponding to the target service flow.

Optionally, the apparatus 1000 is an application function (AF), the second network entity is a radio access network (RAN), the third network entity is an application server (AS), and the fourth network entity is a policy control function (PCF).

FIG. 11 is a schematic structural diagram of a communication apparatus provided by an embodiment of the present application. As shown in FIG. 11, the apparatus 1100 includes a receiving unit 1110 and a configuring unit 1120, which are specifically as follows:
the receiving unit 1110 is configured to receive target jitter information of a target service flow between the apparatus and a third network entity transmitted by a fourth network entity; and
the configuring unit 1120 is configured to perform connected mode discontinuous reception (CDRX) configuration based on the target jitter information.

Optionally, the configuration unit 1120 is specifically configured to perform the CDRX configuration based on the target jitter information and at least one of the following: jitter information of the target service flow between the AS and a fifth network entity, jitter information of the target service flow between the apparatus and the fifth network entity, jitter information of the target service flow between a terminal device and the apparatus, jitter information of the target service flow between the terminal device and the fifth network entity, and jitter information of the target service flow between the terminal device and the third network entity.

Optionally, the apparatus 1100 is a radio access network (RAN), the third network entity is an application server (AS), the fourth network entity is a policy control function (PCF), and a fifth network entity is a user plane function (UPF).

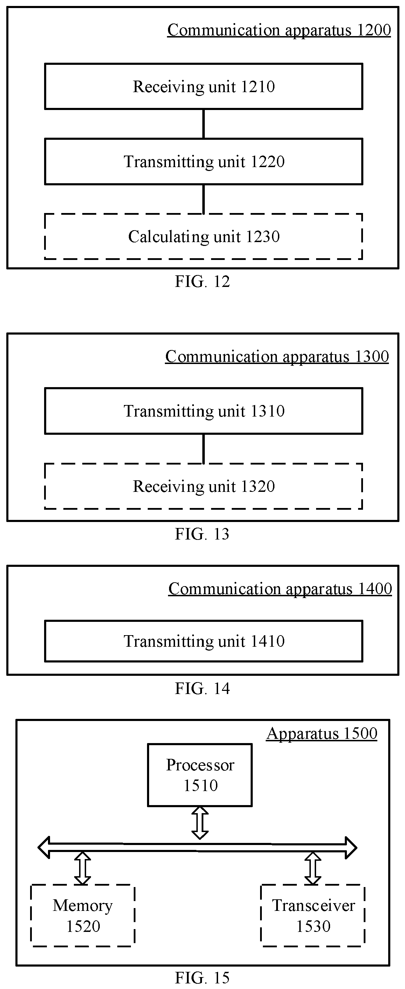

FIG. 12 is a schematic structural diagram of a communication apparatus provided by an embodiment of the present application. As shown in FIG. 12, the apparatus 1200 includes a receiving unit 1210 and a transmitting unit 1220, which are specifically as follows:
the receiving unit 1210 is configured to receive second information transmitted by a fourth network entity, where the second information is used to trigger the apparatus to determine jitter information of a target service flow between the apparatus and a third network entity; and
the transmitting unit 1220 is configured to transmit first jitter information to the fourth network entity, where the first jitter information includes jitter information of the target service flow between the apparatus and the third network entity.

Optionally, the receiving unit 1210 is further configured to receive fourth information transmitted by the fourth network entity, where the fourth information is used to determine the target service flow.

Optionally, the apparatus 1200 further includes a calculating unit 1230, configured to calculate the first jitter information through N third data packets, where a third data packet is a data packet between the apparatus and the third network entity corresponding to the target service flow, and N is an integer greater than or equal to 2.

Optionally, the calculating unit 1230 is specifically configured to obtain the first jitter information according to a time when each data packet in the N third data packets arrives at the apparatus and a timestamp field in a header of each data packet.

Optionally, the apparatus 1200 is a user plane function (UPF), the third network entity is an application server (AS), and the fourth network entity is a policy control function (PCF).

FIG. 13 is a schematic structural diagram of a communication apparatus provided by an embodiment of the present application. As shown in FIG. 13, the apparatus 1300 includes a transmitting unit 1310, which is specifically as follows:
the transmitting unit 1310 is configured to transmit fifth information to a first network entity, where the fifth information is used to trigger the first network entity to determine jitter information of a target service flow between a second network entity and a third network entity.

Optionally, the sending unit 1310, is further configured to transmit sixth information to the first network entity, where the sixth information is used to determine the target service flow.

Optionally, the apparatus 1300 further includes a receiving unit 1320, configured to receive first information transmitted by a sixth network entity, where the first information is used to trigger the apparatus to determine target jitter information of the target service flow between the second network entity and third network entity.

Optionally, the apparatus 1300 further includes a receiving unit 1320, configured to receive third information transmitted by a sixth network entity, where the third information is used to determine the target service flow.

Optionally, the apparatus 1300 is a policy control function (PCF), the first network entity and the second network entity are radio access networks (RANs), the third network entity is an application server (AS), and a sixth network entity is an application function (AF).

FIG. 14 is a schematic structural diagram of a communication apparatus provided by an embodiment of the present application. As shown in FIG. 14, the apparatus 1400 includes a transmitting unit 1410, which is specifically as follows:
the transmitting unit 1410 is configured to transmit seventh information to a first network entity, where the seventh information is used to trigger the first network entity to determine target jitter information of a target service flow between a second network entity and a third network entity.

Optionally, the transmitting unit 1410 is further configured to transmit eighth information to the first network entity, where the eighth information is used to determine the target service flow.

Optionally, the transmitting unit 1410 is further configured to transmit first jitter information to the first network entity, where the first jitter information includes jitter information of the target service flow between the apparatus and the third network entity.

Optionally, the first jitter information is historical jitter information of the target service flow between the apparatus and the third network entity, or the first jitter information is determined by an interarrival jitter field in a header of a second data packet, where the second data packet is a data packet between the apparatus and the third network entity corresponding to the target service flow.

Optionally, the first network entity and the second network entity are radio access networks (RANs), and the third network entity is an application server (AS).

FIG. 15 is a schematic structural diagram of an apparatus provided by an embodiment of the present application. Dashed lines in FIG. 15 indicate that an unit or a module is optional. The apparatus 1500 may be configured to perform the methods described in the above method embodiments. The apparatus 1500 may be a chip or a communication apparatus.

The apparatus 1500 may include one or more processors 1510. A processor 1510 may support the apparatus 1500 to implement the methods described in the above method embodiments. The processor 1510 may be a general purpose processor or a special purpose processor. For example, the processor may be a central processing unit (CPU). Alternatively, the processor may be another general purpose processor, a digital signal processors (DSP), an application specific integrated circuit (ASIC), a field programmable gate array (FPGA) or another programmable logic device, a discrete gate or a transistor logic device, a discrete hardware component, or the like. A general purpose processor may be a microprocessor, or the processor may be any conventional processor or the like.

The apparatus 1500 may further include one or more memories 1520. A memory 1520 stores a program, which may be executed by the processor 1510, to enable the processor 1510 to perform the method described in the above method embodiments. The memory 1520 may be independent of the processor 1510 or may be integrated into the processor 1510.

The apparatus 1500 may further include a transceiver 1530. The processor 1510 may communicate with other devices or chips through the transceiver 1530. For example, the processor 1510 may transmit and receive data with other devices or chips through the transceiver 1530.

The embodiments of the present application further provides a computer-readable storage medium to store a program. The computer-readable storage medium may be applied to the communication apparatus provided by the embodiments of the present application, and the program enables a computer to perform the methods performed by the communication apparatus in each embodiment of the present application.

The embodiments of the present application further provides a computer program product. The computer program product includes a program. The computer program product may be applied to the communication apparatus provided by the embodiments of the present application, and the program enables a computer to perform the methods performed by the communication apparatus in each embodiment of the present application.

The embodiments of the present application further provides a computer program. The computer program may be applied to the communication apparatus provided by the embodiments of the present application, and the computer program enables a computer to perform the methods performed by the communication apparatus in each embodiment of the present application.

It should be understood that in the embodiments of the present application, "B corresponding to A" means that B is associated with A, and B may be determined according to A. However, it should also be understood that determining B according to A does not mean determining B only according to A, it may also be determined according to A and/or other information.

It should be understood that the term "and/or" here is only a description of an association relationship of associated objects, and indicates that there may be three kinds of relationships. For example, "A and/or B" may represent three cases: A exists alone, both A and B exist, and B exists alone. In addition, the character "/" herein generally indicates that the associated objects before and after this character are in an "or" relationship.

It should be understood that in the various embodiments of the present application, the magnitude of the serial numbers of the above processes does not mean an execution order. The execution order of each process should be determined by its function and internal logic, and should not constitute any limitation on the implementation process of the embodiments of the present application.

In several embodiments provided by the present application, it should be understood that, the disclosed system, apparatuses and methods may be implemented in other ways. For example, the apparatus embodiments described above are only schematic. For example, the division of the units is only division of logical functions, and there may be other division ways in the actual implementation, such as a plurality of units or components may be combined or integrated into another system, or some features may be ignored or not implemented. In addition, the mutual coupling or direct coupling or communication connection illustrated or discussed may be indirect coupling or communication connection through some interfaces, apparatuses or units, which may be in electrical, mechanical or other forms.

The units described as separation components may or may not be physically separated, and the components shown as units may or may not be physical units, that is, they may be located at one place, or may be distributed onto a plurality of network units. Some or all of the units may be selected according to actual requirements to implement the purpose of the solution of the embodiments.

In addition, various functional units in various embodiments of the present application may be integrated into one processing unit, or various units may exist physically alone, or two or more units may be integrated into one unit.

In the above embodiments, all or part of the above embodiments may be implemented by software, hardware, firmware or any combination thereof. When implemented using software, all or part of the above embodiments may be implemented in a form of the computer program product. The computer program product includes one or more computer instructions. When the computer program instructions are loaded and executed on a computer, the process or the function described in the embodiments of the present application is generated in all or part. The computer may be a general purpose computer, a special purpose computer, a computer network, or other programmable apparatuses. The computer instructions may be stored in a computer-readable storage medium, or transmitted from one computer-readable storage medium to another computer-readable storage medium. For example, the computer instructions may be transmitted from a website, a computer, a server, or a data center to another website, computer, server, or data center through wired manner (e.g., coaxial cable, optical fiber, digital subscriber line (DSL)) or wireless (e.g., infrared, wireless, or microwave) manner. The computer-readable storage medium may be any available medium that can be read by the computer or a data storage device, such as a server or a data center that includes one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)).

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A communication method, comprising:
obtaining, by a first network entity, first jitter information and/or first delay information; and
determining, by the first network entity according to the first jitter information and/or the first delay information, target jitter information of a target service flow between a second network entity and a third network entity.

2. The method according to claim 1, wherein the first jitter information comprises jitter information of the target service flow between a terminal device and the third network entity, and the first delay information comprises at least one of:
delay information of the target service flow between the terminal device and the second network entity; and
delay information of the target service flow between the terminal device and a fifth network entity, and delay information of the target service flow between the second network entity and the fifth network entity;
wherein obtaining, by the first network entity, the first jitter information and/or the first delay information comprises:
receiving, by the first network entity, the first jitter information transmitted by a sixth network entity; and
obtaining, by the first network entity, the first delay information via quality of service (QoS) monitoring.

3. The method according to claim 2, further comprising:
determining, by the first network entity according to the first delay information, second jitter information, wherein the second jitter information comprises jitter information of the target service flow between the terminal device and the second network entity;
wherein determining, by the first network entity according to the first jitter information and/or the first delay information, the target jitter information of the target service flow between the second network entity and the third network entity comprises:
subtracting, by the first network entity, the jitter information of the target service flow between the terminal device and the second network entity from the first jitter information, to obtain the target jitter information.

4. The method according to claim 3, wherein the second jitter information further comprises at least one of: jitter information of the target service flow between the terminal device and the fifth network entity, and jitter information of the target service flow between the second network entity and the fifth network entity.

5. The method according to claim 1, wherein the first jitter information comprises jitter information of the target service flow between a fifth network entity and the third network entity, and the first delay information comprises delay information of the target service flow between the second network entity and the fifth network entity;
wherein obtaining, by the first network entity, the first jitter information and/or the first delay information comprises:
receiving, by the first network entity, the first jitter information transmitted by the fifth network entity; and
obtaining, by the first network entity, the first delay information via quality of service (QoS) monitoring.

6. The method according to claim 5, further comprising:
determining, by the first network entity according to the first delay information, third jitter information, wherein the third jitter information comprises jitter information of the target service flow between the second network entity and the fifth network entity;
wherein determining, by the first network entity according to the first jitter information and/or the first delay information, the target jitter information of the target service flow between the second network entity and the third network entity comprises:
adding, by the first network entity, the first jitter information to the jitter information of the target service flow between the second network entity and the fifth network entity, to obtain the target jitter information.

7. The method according to claim 6, wherein the first delay information further comprises at least one of: delay information of the target service flow between the terminal device and the fifth network entity, and delay information of the target service flow between the terminal device and the second network entity; and the third jitter information further comprises at least one of: jitter information of the target service flow between the terminal device and the fifth network entity, and jitter information of the target service flow between the terminal device and the second network entity.

8. The method according to any one of claims 2 to 7, further comprising:
transmitting, by the first network entity, the target jitter information to the second network entity.

9. The method according to any one of claims 2 to 8, further comprising:
receiving, by the first network entity, first information transmitted by a sixth network entity, wherein the first information is used to trigger the first network entity to determine the target jitter information of the target service flow between the second network entity and the third network entity.

10. The method according to claim 9, wherein before receiving, by the first network entity, the first information transmitted by the sixth network entity, the method further comprises:
receiving, by the first network entity, third information transmitted by the sixth network entity, wherein the third information is used to determine the target service flow.

11. The method according to any one of claims 5 to 8, further comprising:
transmitting, by the first network entity, second information to the fifth network entity, wherein the second information is used to trigger the fifth network entity to determine jitter information of the target service flow between the fifth network entity and the third network entity.

12. The method according to claim 11, further comprising:
transmitting, by the first network entity, fourth information to the fifth network entity, wherein the fourth information is used to determine the target service flow.

13. The method according to any one of claims 2 to 12, wherein the first network entity is a policy control function (PCF), the second network entity is a radio access network (RAN), the third network entity is an application server (AS), the fifth network entity is a user plane function (UPF), and a sixth network entity is an application function (AF).

14. The method according to claim 1, wherein the first jitter information comprises jitter information of the target service flow between the second network entity and the third network entity;
wherein obtaining, by the first network entity, the first jitter information and/or the first delay information comprises:
calculating, by the first network entity, the first jitter information through N first data packets, wherein a first data packet is a data packet between the second network entity and the third network entity corresponding to the target service flow, and N is an integer greater than or equal to 2.

15. The method according to claim 14, wherein calculating, by the first network entity, the first jitter information through the N first data packets comprises:
obtaining, by the first network entity, the first jitter information according to a time when each date packet in the N first data packets arrives at the second network entity and a timestamp field in a header of each data packet.

16. The method according to claim 14 or 15, further comprising:
receiving, by the first network entity, fifth information transmitted by a fourth network entity, wherein the fifth information is used to trigger the first network entity to determine the target jitter information of the target service flow between the second network entity and the third network entity.

17. The method according to any one of claims 14 to 16, further comprising:
receiving, by the first network entity, sixth information transmitted by a fourth network entity, wherein the sixth information is used to determine the target service flow.

18. The method according to claim 1, wherein the first jitter information comprises jitter information of the target service flow between a terminal device and the third network entity, and the first delay information comprises delay information of the target service flow between the terminal device and the second network entity;
wherein obtaining, by the first network entity, the first jitter information and/or the first delay information comprises:
receiving, by the first network entity, the first jitter information transmitted by the terminal device; and
obtaining, by the first network entity, the first delay information.

19. The method according to claim 18, further comprising:
determining, by the first network entity, fourth jitter information according to the first delay information, wherein the fourth jitter information comprises jitter information of the target service flow between the terminal device and the second network entity;
wherein determining, by the first network entity according to the first jitter information and/or the first delay information, the target jitter information of the target service flow between the second network entity and the third network entity comprises:
subtracting, by a RAN, the jitter information of the target service flow between the terminal device and the second network entity from the first jitter information, to obtain the target jitter information.

20. The method according to claim 18 or 19, further comprising:
receiving, by the first network entity, seventh information transmitted by the terminal device, wherein the seventh information is used to trigger the first network entity to determine jitter information of the target service flow between the second network entity and the third network entity.

21. The method according to any one of claims 18 to 20, further comprising:
receiving, by the first network entity, eighth information transmitted by the terminal device, wherein the eighth information is used to determine the target service flow.

22. The method according to any one of claims 14 to 21, further comprising:
performing, by the first network entity, connected mode discontinuous reception (CDRX) configuration based on the target jitter information.

23. The method according to any one of claims 14 to 22, wherein the first network entity is a radio access network (RAN), the second network entity is a RAN, the third network entity is an application server (AS), and the fourth network entity is a policy control function (PCF).

24. A communication method, comprising:
transmitting, by a sixth network entity, first information to a fourth network entity, wherein the first information is used to trigger the fourth network entity to determine target jitter information of a target service flow between a second network entity and a third network entity.

25. The method according to claim 24, further comprising:
transmitting, by the sixth network entity, third information to the fourth network entity, wherein the third information is used to determine the target service flow.

26. The method according to claim 24 or 25, further comprising:
transmitting, by the sixth network entity, first jitter information to the fourth network entity, wherein the first jitter information comprises jitter information of the target service flow between a terminal device and the third network entity.

27. The method according to claim 26, wherein the first jitter information is historical jitter information of the target service flow between the terminal device and the third network entity, or the first jitter information is determined by an interarrival jitter field in a header of a second data packet, wherein the second data packet is a data packet between the terminal device and the third network entity corresponding to the target service flow.

28. The method according to any one of claims 24 to 27, wherein the second network entity is a radio access network (RAN), the third network entity is an application server (AS), the fourth network entity is a policy control function (PCF), and the sixth network entity is an application function (AF).

29. A communication method, comprising:
receiving, by a second network entity, target jitter information of a target service flow between the second network entity and a third network entity transmitted by a fourth network entity; and
performing, by the second network entity, connected mode discontinuous reception (CDRX) configuration based on the target jitter information.

30. The method according to claim 29, wherein performing, by the second network entity, the connected mode discontinuous reception (CDRX) configuration based on the target jitter information comprises:
performing, by the second network entity, the CDRX configuration based on the target jitter information and at least one of:
jitter information of the target service flow between the third network entity and a fifth network entity, jitter information of the target service flow between the second network entity and the fifth network entity, jitter information of the target service flow between a terminal device and the second network entity, jitter information of the target service flow between the terminal device and the fifth network entity, and jitter information of the target service flow between the terminal device and the third network entity.

31. The method according to claim 29 or 30, wherein the second network entity is a radio access network (RAN), the third network entity is an application server (AS), the fourth network entity is a policy control function (PCF), and a fifth network entity is a user plane function (UPF).

32. A communication method, comprising:
receiving, by a fifth network entity, second information transmitted by a fourth network entity, wherein the second information is used to trigger the fifth network entity to determine jitter information of a target service flow between the fifth network entity and a third network entity; and
transmitting, by the fifth network entity, first jitter information to the fourth network entity, wherein the first jitter information comprises the jitter information of the target service flow between the fifth network entity and the third network entity.

33. The method according to claim 32, further comprising:
receiving, by the fifth network entity, fourth information transmitted by the fourth network entity, wherein the fourth information is used to determine the target service flow.

34. The method according to claim 32 or 33, further comprising:
calculating, by the fifth network entity, the first jitter information through N third data packets, wherein a third data packet is a data packet between the fifth network entity and the third network entity corresponding to the target service flow, and N is an integer greater than or equal to 2.

35. The method according to claim 34, wherein calculating, by the fifth network entity, the first jitter information through the N third data packets comprises:
obtaining, by the fifth network entity, the first jitter information according to a time when each date packet in the N third data packets arrives at the fifth network entity and a timestamp field in a header of each data packet.

36. The method according to any one of claims 32 to 35, wherein the third network entity is an application server (AS), the fourth network entity is a policy control function (PCF), and the fifth network entity is a user plane function (UPF).

37. A communication method, comprising:
transmitting, by a fourth network entity, fifth information to a first network entity, wherein the fifth information is used to trigger the first network entity to determine jitter information of a target service flow between a second network entity and a third network entity.

38. The method according to claim 37, wherein before transmitting, by the fourth network entity, the fifth information to the first network entity, the method further comprises:
transmitting, by the fourth network entity, sixth information to the second network entity, wherein the sixth information is used to determine the target service flow.

39. The method according to claim 37 or 38, further comprising:
receiving, by the fourth network entity, first information transmitted by a sixth network entity, wherein the first information is used to trigger the fourth network entity to determine target jitter information of the target service flow between the second network entity and the third network entity.

40. The method according to any one of claims 37 to 39, further comprising:
receiving, by the fourth network entity, third information transmitted by a sixth network entity, wherein the third information is used to determine the target service flow.

41. The method according to any one of claims 37 to 40, wherein the first network entity and the second network entity are radio access networks (RANs), the third network entity is an application server (AS), the fourth network entity is a policy control function (PCF), and a sixth network entity is an application function (AF).

42. A communication method, comprising:
transmitting, by a terminal device, seventh information to a first network entity, wherein the seventh information is used to trigger the first network entity to determine target jitter information of a target service flow between a second network entity and a third network entity.

43. The method according to claim 42, further comprising:
transmitting, by the terminal device, eighth information to the first network entity, wherein the eighth information is used to determine the target service flow.

44. The method according to claim 42 or 43, further comprising:
transmitting, by the terminal device, first jitter information to the first network entity, wherein the first jitter information comprises jitter information of the target service flow between the terminal device and the third network entity.

45. The method according to claim 44, wherein the first jitter information is historical jitter information of the target service flow between the terminal device and the third network entity, or the first jitter information is determined by an interarrival jitter field in a header of a second data packet, wherein the second data packet is a data packet between the terminal device and the third network entity corresponding to the target service flow.

46. The method according to any one of claims 42 to 45, wherein the first network entity and the second network entity are radio access networks (RANs), and the third network entity is an application server (AS).

47. A communication apparatus, comprising:
an obtaining unit, configured to obtain first jitter information and/or first delay information; and
a determining unit, configured to determine target jitter information of a target service flow between a second network entity and a third network entity according to the first jitter information and/or the first delay information.

48. The apparatus according to claim 47, wherein the first jitter information comprises jitter information of the target service flow between a terminal device and the third network entity, and the first delay information comprises at least one of:
delay information of the target service flow between the terminal device and the second network entity;
and
delay information of the target service flow between the terminal device and a fifth network entity, and delay information of the target service flow between the second network entity and the fifth network entity;
wherein the obtaining unit is specifically configured to receive the first jitter information transmitted by a sixth network entity; and obtain the first delay information via quality of service (QoS) monitoring.

49. The apparatus according to claim 48, wherein the determining unit is further configured to determine second jitter information according to the first delay information, wherein the second jitter information comprises jitter information of the target service flow between the terminal device and the second network entity; and
the determining unit is specifically configured to subtract the jitter information of the target service flow between the terminal device and the second network entity from the first jitter information, to obtain the target jitter information.

50. The apparatus according to claim 49, wherein the second jitter information further comprises at least one of: jitter information of the target service flow between the terminal device and the fifth network entity, and jitter information of the target service flow between the second network entity and the fifth network entity.

51. The apparatus according to claim 47, wherein the first jitter information comprises jitter information of the target service flow between a fifth network entity and the third network entity, and the first delay information comprises delay information of the target service flow between the second network entity and the fifth network entity;
wherein the obtaining unit is specifically configured to receive the first jitter information transmitted by the fifth network entity; and obtain the first delay information via quality of service (QoS) monitoring.

52. The apparatus according to claim 51, wherein the determining unit is further configured to determine third jitter information according to the first delay information, wherein the third jitter information comprises jitter information of the target service flow between the second network entity and the fifth network entity; and
the determining unit is specifically configured to add the first jitter information to the jitter information of the target service flow between the second network entity and the fifth network entity, to obtain the target jitter information.

53. The apparatus according to claim 52, wherein the first delay information further comprises at least one of: delay information of the target service flow between the terminal device and the fifth network entity, and delay information of the target service flow between the terminal device and the second network entity; and the third jitter information further comprises at least one of: jitter information of the target service flow between the terminal device and the fifth network entity, and jitter information of the target service flow between the terminal device and the second network entity.

54. The apparatus according to any one of claims 48 to 53, wherein the apparatus further comprises a transmitting unit, configured to transmit the target jitter information to the second network entity.

55. The apparatus according to any one of claims 48 to 54, wherein the apparatus further comprises a receiving unit, configured to receive first information transmitted by a sixth network entity, wherein the first information is used to trigger the first network entity to determine the target jitter information of the target service flow between the second network entity and the third network entity.

56. The apparatus according to claim 55, wherein the apparatus further comprises the receiving unit, configured to receive third information transmitted by the sixth network entity, wherein the third information is used to determine the target service flow.

57. The apparatus according to any one of claims 51 to 54, wherein the apparatus further comprises a transmitting unit, configured to transmit second information to the fifth network entity, wherein the second information is used to trigger the fifth network entity to determine jitter information of the target service flow between the fifth network entity and the third network entity.

58. The apparatus according to claim 57, wherein the apparatus further comprises the transmitting unit, configured to transmit fourth information to the fifth network entity, where the fourth information is used to determine the target service flow.

59. The apparatus according to any one of claims 48 to 58, wherein the apparatus is a policy control function (PCF), the second network entity is a radio access network (RAN), the third network entity is an application server (AS), the fifth network entity is a user plane function (UPF), and a sixth network entity is an application function (AF).

60. The apparatus according to claim 47, wherein the first jitter information comprises jitter information of the target service flow between the second network entity and the third network entity;
wherein the obtaining unit is specifically configured to calculate the first jitter information through N first data packets, wherein a first data packet is a data packet between the second network entity and the third network entity corresponding to the target service flow, and N is an integer greater than or equal to 2.

61. The apparatus according to claim 60, wherein the obtaining unit is specifically configured to obtain the first jitter information according to a time when each date packet in the N first data packets arrives at the second network entity and a timestamp field in a header of each data packet.

62. The apparatus according to claim 60 or 61, wherein the apparatus further comprises a receiving unit, configured to receive fifth information transmitted by a fourth network entity, wherein the fifth information is used to trigger the second network entity to determine the target jitter information of the target service flow between the second network entity and the third network entity.

63. The apparatus according to any one of claims 60 to 62, wherein the apparatus further comprises a receiving unit, configured to receive sixth information transmitted by a fourth network entity, wherein the sixth information is used to determine the target service flow.

64. The apparatus according to claim 47, wherein the first jitter information comprises jitter information of the target service flow between a terminal device and the third network entity, and the first delay information comprises delay information of the target service flow between the terminal device and the second network entity;
wherein the obtaining unit is specifically configured to receive the first jitter information transmitted by the terminal device; and obtain the first delay information.

65. The apparatus according to claim 64, wherein the determining unit is further configured to determine fourth jitter information according to the first delay information, wherein the fourth jitter information comprises jitter information of the target service flow between the terminal device and the second network entity; and
the determining unit is specifically configured to subtract the jitter information of the target service flow between the terminal device and the second network entity from the first jitter information, to obtain the target jitter information.

66. The apparatus according to claim 64 or 65, wherein the apparatus further comprises a receiving unit, configured to receive seventh information transmitted by the terminal device, wherein the seventh information is used to trigger the first network entity to determine jitter information of the target service flow between the second network entity and the third network entity.

67. The apparatus according to any one of claims 64 to 66, wherein the apparatus further comprises a receiving unit, configured to receive eighth information transmitted by the terminal device, wherein the eighth information is used to determine the target service flow.

68. The apparatus according to any one of claims 60 to 67, wherein the apparatus further comprises a configuring unit, configured to perform connected mode discontinuous reception (CDRX) configuration based on the target jitter information.

69. The apparatus according to any one of claims 60 to 68, wherein the apparatus is a radio access network (RAN), the second network entity is a RAN, the third network entity is an application server (AS), and the fourth network entity is a policy control function (PCF).

70. A communication apparatus, comprising:
a transmitting unit, configured to transmit first information to a fourth network entity, wherein the first information is used to trigger the fourth network entity to determine target jitter information of a target service flow between a second network entity and a third network entity.

71. The apparatus according to claim 70, wherein the transmitting unit is further configured to transmit third information to the fourth network entity, wherein the third information is used to determine the target service flow.

72. The apparatus according to claim 70 or 71, wherein the transmitting unit is further configured to transmit first jitter information to the fourth network entity, wherein the first jitter information comprises jitter information of the target service flow between a terminal device and the third network entity.

73. The apparatus according to claim 72, wherein the first jitter information is historical jitter information of the target service flow between the terminal device and the third network entity, or the first jitter information is determined by an interarrival jitter field in a header of a second data packet, wherein the second data packet is a data packet between the terminal device and the third network entity corresponding to the target service flow.

74. The apparatus according to any one of claims 70 to 73, wherein the apparatus is an application function (AF), the second network entity is a radio access network (RAN), the third network entity is an application server (AS), and the fourth network entity is a policy control function (PCF).

75. A communication apparatus, comprising:
a receiving unit, configured to receive target jitter information of a target service flow between the apparatus and a third network entity transmitted by a fourth network entity; and
a configuring unit, configured to perform connected mode discontinuous reception (CDRX) configuration based on the target jitter information.

76. The apparatus according to claim 75, wherein the configuration unit is specifically configured to perform the CDRX configuration based on the target jitter information and at least one of:
jitter information of the target service flow between the third network entity and a fifth network entity, jitter information of the target service flow between the apparatus and the fifth network entity, jitter information of the target service flow between a terminal device and the apparatus, jitter information of the target service flow between the terminal device and the fifth network entity, and jitter information of the target service flow between the terminal device and the third network entity.

77. The apparatus according to claim 75 or 76, wherein the apparatus is a radio access network (RAN), the third network entity is an application server (AS), the fourth network entity is a policy control function (PCF), and a fifth network entity is a user plane function (UPF).

78. A communication apparatus, comprising:
a receiving unit, configured to receive second information transmitted by a fourth network entity, wherein the second information is used to trigger the apparatus to determine jitter information of a target service flow between the apparatus and a third network entity; and
a transmitting unit, configured to transmit first jitter information to the fourth network entity, wherein the first jitter information comprises the jitter information of the target service flow between the apparatus and the third network entity.

79. The apparatus according to claim 78, wherein the receiving unit is further configured to receive fourth information transmitted by the fourth network entity, wherein the fourth information is used to determine the target service flow.

80. The apparatus according to claim 78 or 79, wherein the apparatus further comprises a calculating unit, configured to calculate the first jitter information through N third data packets, wherein a third data packet is a data packet between the apparatus and the third network entity corresponding to the target service flow, and N is an integer greater than or equal to 2.

81. The apparatus according to claim 80, wherein the calculating unit is specifically configured to obtain the first jitter information according to a time when each date packet in the N third data packets arrives at the apparatus and a timestamp field in a header of each data packet.

82. The apparatus according to any one of claims 78 to 81, wherein the apparatus is a user plane function (UPF), the third network entity is an application server (AS), and the fourth network entity is a policy control function (PCF).

83. A communication apparatus, comprising:
a transmitting unit, configured to transmit fifth information to a first network entity, wherein the fifth information is used to trigger the first network entity to determine jitter information of a target service flow between a second network entity and a third network entity.

84. The apparatus according to claim 83, wherein the transmitting unit is further configured to transmit sixth information to the first network entity, wherein the sixth information is used to determine the target service flow.

85. The apparatus according to claim 83 or 84, wherein the apparatus further comprises a receiving unit, configured to receive first information transmitted by a sixth network entity, wherein the first information is used to trigger the apparatus to determine target jitter information of the target service flow between the second network entity and the third network entity.

86. The apparatus according to any one of claims 83 to 85, wherein the apparatus further comprises a receiving unit, configured to receive third information transmitted by a sixth network entity, wherein the third information is used to determine the target service flow.

87. The apparatus according to any one of claims 83 to 86, wherein the apparatus is a policy control function (PCF), the first network entity and the second network entity are radio access networks (RANs), the third network entity is an application server (AS), and a sixth network entity is an application function (AF).

88. A communication apparatus, comprising:
a transmitting unit, configured to transmit seventh information to a first network entity, wherein the seventh information is used to trigger the first network entity to determine target jitter information of a target service flow between a second network entity and a third network entity.

89. The apparatus according to claim 88, wherein the transmitting unit is further configured to:
transmit eighth information to the first network entity, wherein the eighth information is used to determine the target service flow.

90. The apparatus according to claim 88 or 89, wherein the transmitting unit is further configured to transmit first jitter information to the first network entity, wherein the first jitter information comprises jitter information of the target service flow between the apparatus and the third network entity.

91. The apparatus according to claim 90, wherein the first jitter information is historical jitter information of the target service flow between the apparatus and the third network entity, or the first jitter information is determined by an interarrival jitter field in a header of a second data packet, wherein the second data packet is a data packet between the apparatus and the third network entity corresponding to the target service flow.

92. The apparatus according to any one of claims 88 to 91, wherein the first network entity and the second network entity are radio access networks (RANs), and the third network entity is an application server (AS).

93. A communication apparatus, comprising a memory, a transceiver and a processor, wherein the memory is configured to store a program, the processor receives and transmits data via the transceiver, and the processor is configured to call the program in the memory, to enable the communication apparatus to perform the method according to any one of claims 1 to 46.

94. A communication apparatus, comprising a processor, configured to call a program from a memory, to enable the communication apparatus to perform the method according to any one of claims 1 to 46.

95. A chip, comprising a processor, configured to call a program from a memory, to enable a device equipped with the chip to perform the method according to any one of claims 1 to 46.

96. A computer-readable storage medium, configured to store a program, wherein the program enables a computer to perform the method according to any one of claims 1 to 46.

97. A computer program product, comprising a program, wherein the program enables a computer to perform the method according to any one of claims 1 to 46.

98. A computer program, wherein the computer program enables a computer to perform the method according to any one of claims 1 to 46.
